(19) Europäisches Patentamt
European Patent Office
Office européen des brevets

(11) EP 4 223 909 A1

(12) EUROPEAN PATENT APPLICATION
published in accordance with Art. 153(4) EPC

(43) Date of publication:
**09.08.2023 Bulletin 2023/32**

(21) Application number: **21875428.1**

(22) Date of filing: **24.09.2021**

(51) International Patent Classification (IPC):
***C25B 11/054*** *(2021.01)* ***C25B 11/073*** *(2021.01)*
***C25B 9/00*** *(2021.01)*

(52) Cooperative Patent Classification (CPC):
**C25B 9/00; C25B 11/054; C25B 11/073;**
Y02E 60/36

(86) International application number:
**PCT/JP2021/035119**

(87) International publication number:
**WO 2022/071126 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.10.2020 JP 2020167899**

(71) Applicant: **Panasonic Intellectual Property Management Co., Ltd.**
**Osaka-shi, Osaka 540-6207 (JP)**

(72) Inventors:
- **SHIRATAKI, Hiroshi**
  **Osaka-shi, Osaka 540-6207 (JP)**
- **MURASE, Hideaki**
  **Osaka-shi, Osaka 540-6207 (JP)**
- **HAYASHI ,Takao**
  **Osaka-shi, Osaka 540-6207 (JP)**
- **SUZUKA, Michio**
  **Osaka-shi, Osaka 540-6207 (JP)**

(74) Representative: **Grünecker Patent- und Rechtsanwälte**
**PartG mbB**
**Leopoldstraße 4**
**80802 München (DE)**

# (54) ELECTRODE CATALYST FOR WATER ELECTROLYSIS CELL, WATER ELECTROLYSIS CELL, AND WATER ELECTROLYSIS DEVICE

(57) An electrode catalyst for a water electrolysis cell includes a catalyst, and a polymer of intrinsic microporosity having a Tröger's base skeleton containing a quaternary ammonium group. A water electrolysis cell includes an anode, a cathode, and an electrolyte membrane. The electrolyte membrane is disposed between the anode and the cathode. At least one selected from the group consisting of the anode and the cathode includes the electrode catalyst for water electrolysis cell.

FIG. 1

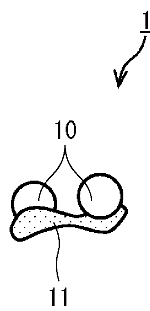


EP 4 223 909 A1

## Description

Technical Field

The present disclosure relates to an electrode catalyst for water electrolysis cell, a water electrolysis cell and a water electrolyzer.

Background Art

In recent years, there is an expectation for the development of catalyst materials used in water electrolyzers.
Patent Literature 1 discloses a polymer having a Tröger's base skeleton.
Non Patent Literature 1 discloses anion exchange membranes including quaternized Tröger's base-polymers of intrinsic microporosity (QTB-PIM).

Citation List

Patent Literature

PTL 1: WO 2017/091357

Non Patent Literature

NPL 1: Zhengjin Yang et al., "Highly Conductive Anion-Exchange Membranes from Microporous Tröger's Base Polymers," Angewandte Chemie International Edition, 2016, Vol. 55, pp.11499-11502

Summary of Invention

Technical Problem

The present disclosure provides an electrode catalyst for water electrolysis cell having a low overvoltage.

Solution to Problem

The present disclosure provides an electrode catalyst for a water electrolysis cell including:

a catalyst; and
a polymer of intrinsic microporosity having a Tröger's base skeleton containing a quaternary ammonium group.

Advantageous Effects of Invention

The electrode catalyst for water electrolysis cell provided according to the present disclosure may attain a low overvoltage.

Brief Description of Drawings

[Fig. 1] Fig. 1 is a view schematically illustrating an electrode catalyst for water electrolysis cell according to a first embodiment.
[Fig. 2] Fig. 2 is a view schematically illustrating an exemplary crystal structure of layered double hydride (LDH).
[Fig. 3] Fig. 3 is a view schematically illustrating another example of the electrode catalysts for water electrolysis cells according to the first embodiment.
[Fig. 4] Fig. 4 is a sectional view schematically illustrating an example of water electrolysis cells according to a second embodiment.
[Fig. 5] Fig. 5 is a sectional view schematically illustrating an example of water electrolyzers according to a third embodiment.
[Fig. 6] Fig. 6 is a sectional view schematically illustrating an example of water electrolysis cells according to a fourth embodiment.

[Fig. 7] Fig. 7 is a sectional view schematically illustrating an example of water electrolyzers according to a fifth embodiment.

Description of Embodiments

<Underlying Knowledge Forming Basis of the Present Disclosure>

The use of renewable energy such as sunlight and wind power attracts attention as a measure to fight against the global warming. Unfortunately, power generation using renewable energy has a drawback in that surplus power is wasted. Thus, renewable energy is not always used fairly efficiently. Approaches are then studied in which hydrogen is produced from surplus power and is stored.

The electrolysis of water is a method that may be generally used to produce hydrogen from surplus power. The electrolysis of water is also called water electrolysis. In order to produce hydrogen stably at low cost, the development is desired of a highly efficient and long-life water electrolyzer. The major component constituting a water electrolyzer is a membrane electrode assembly (MEA) composed of a gas diffusion layer, an electrode catalyst and an electrolyte membrane.

In order to provide a highly efficient and long-life water electrolyzer, a particular need is to enhance the performance and the durability of an electrode catalyst. Using an organic material for an electrode catalyst in a water electrolysis cell is a possible approach to enhancing the dispersibility of the catalyst and/or to enhancing the adhesion with respect to a base such as an electrode. By using an organic material, the catalyst may attain enhanced dispersibility or enhanced adhesion with respect to a base such as a substrate.

However, organic materials typically have a high electrical resistance and hence an increased overvoltage may result when a voltage is applied to an electrode catalyst including an organic material. For example, this stems from active sites on the surface of the catalyst being covered with the organic material, and also from the swelling of the organic material to extend the distance between the catalyst and a carrier. Other possible factors causing an increase in overvoltage are that the organic material hinders the access of the raw material for the gas-generating reaction of water electrolysis to the catalyst, and that the organic material blocks the diffusion of the product from the water electrolysis.

It is therefore an important task to provide an electrode catalyst that includes an organic material but can still suppress an increase in electrode overvoltage. The present inventors then carried out extensive studies on electrode catalysts that would suppress an increase in electrode overvoltage, and have consequently newly found that the use of a specific organic material advantageously suppresses an increase in overvoltage of an electrode catalyst for water electrolysis cell.

<Summary of Aspects of the Present Disclosure>

An electrode catalyst for a water electrolysis cell according to a first aspect of the present disclosure includes:

a catalyst; and
a polymer of intrinsic microporosity having a Tröger's base skeleton containing a quaternary ammonium group.

The electrode catalyst for the water electrolysis cell provided according to the first aspect may attain a low overvoltage.

In a second aspect of the present disclosure, for example, in the electrode catalyst for the water electrolysis cell according to the first aspect, the catalyst may include a layered double hydroxide. The electrode catalyst for the water electrolysis cell according to the second aspect tends to have a low overvoltage more reliably.

In a third aspect of the present disclosure, for example, the electrode catalyst for the water electrolysis cell according to the first or the second aspect may further include a carrier supporting the catalyst, and the carrier may include at least one selected from the group consisting of a transition metal and carbon. The electrode catalyst for the water electrolysis cell according to the third aspect tends to exhibit excellent catalytic activity more reliably.

In a fourth aspect of the present disclosure, for example, in the electrode catalyst for the water electrolysis cell according to the first aspect, the catalyst may include iridium oxide. The electrode catalyst for the water electrolysis cell according to the fourth aspect tends to have a low overvoltage more reliably.

In a fifth aspect of the present disclosure, for example, in the electrode catalyst for the water electrolysis cell according to any one of the first to the fourth aspect, the polymer of intrinsic microporosity may be composed of a single kind of a monomer. The electrode catalyst including the polymer of intrinsic microporosity according to the fifth aspect tends to be produced at low cost.

In a sixth aspect of the present disclosure, for example, in the electrode catalyst for the water electrolysis cell

according to any one of the first to the fifth aspect, the polymer of intrinsic microporosity may include a group of atoms linking a plurality of nitrogen-containing heterocyclic rings to one another, and the group of atoms may include an aromatic ring. The polymer of intrinsic microporosity according to the sixth aspect may attain excellent rigidity more reliably.

In a seventh aspect of the present disclosure, for example, the electrode catalyst for the water electrolysis cell according to the sixth aspect may be such that the group of atoms does not include a crown ether. The polymer of intrinsic microporosity according to the seventh aspect exhibits swelling resistance more reliably.

A water electrolysis cell according to an eighth aspect of the present disclosure includes:

an anode;
a cathode; and
an electrolyte membrane disposed between the anode and the cathode, wherein
at least one selected from the group consisting of the anode and the cathode includes the electrode catalyst according to any one of the first to the seventh aspect.

The water electrolysis cell according to the eighth aspect may attain a low overvoltage.

In a ninth aspect of the present disclosure, for example, in the water electrolysis cell according to the eighth aspect, the electrolyte membrane may include an anion exchange membrane. According to the ninth aspect, mixing is unlikely to happen between the oxygen gas generated at the anode and the hydrogen gas generated at the cathode.

A water electrolysis cell according to a tenth aspect of the present disclosure includes:

a diaphragm separating a first space and a second space from each other;
an anode disposed in the first space; and
a cathode disposed in the second space, wherein
at least one selected from the group consisting of the anode and the cathode includes the electrode catalyst according to any one of the first to the seventh aspect.

The water electrolysis cell according to the tenth aspect may attain a low overvoltage.

A water electrolyzer according to an eleventh aspect of the present disclosure includes:

the water electrolysis cell according to any one of the eighth to the tenth aspect; and
a voltage applicator connected to the anode and the cathode and capable of applying a voltage between the anode and the cathode.

The water electrolyzer according to the eleventh aspect may attain a low overvoltage.

Hereinbelow, embodiments of the present disclosure will be described with reference to the drawings. The scope of the present disclosure is not limited to the embodiments discussed below.

(First embodiment)

Fig. 1 is a view schematically illustrating an electrode catalyst for a water electrolysis cell according to an embodiment. The electrode catalyst 1 includes a catalyst 10, and a polymer 11 of intrinsic microporosity having a Tröger's base skeleton containing a quaternary ammonium group (the polymer may be abbreviated as QTB-PIM). According to this configuration, the QTB-PIM 11 has hydroxide ion conductivity to facilitate the access of the raw material for the gas-generating reaction of water electrolysis to the catalyst 10. Consequently, the increase in overvoltage is easily suppressed when a voltage is applied to the electrode catalyst 1. That is, the electrode catalyst 1 tends to attain a low overvoltage.

[QTB-PIM]

The QTB-PIM 11 is a polymer of intrinsic microporosity that has a Tröger's base skeleton containing a quaternary ammonium group. The QTB-PIM 11 is an organic polymer having a cationic functional group. Polymers of intrinsic microporosity are typically organic polymers that have a specific molecular structure and an intrinsic microporosity.

For example, the QTB-PIM 11 is present on at least part of the surface of the catalyst 10. The QTB-PIM 11 may be present between particles of the catalyst 10. The QTB-PIM 11 may be in contact with the catalyst 10. The QTB-PIM 11 may cover at least part of the surface of the catalyst 10. As a result of the electrode catalyst 1 including the QTB-PIM 11, the electrode catalyst 1 may be formed on a base such as a substrate with enhanced adhesion between the base and the electrode catalyst 1. Thus, the electrode catalyst 1 may attain excellent durability.

The QTB-PIM 11 may serve to disperse particles of the catalyst 10. In this case, the incorporation of the QTB-PIM 11 in the electrode catalyst 1 prevents particles of the catalyst 10 from being aggregated.

As described above, the QTB-PIM 11 has a Tröger's base skeleton containing a quaternary ammonium group. For example, the Tröger's base skeleton has a bicyclic compound, and the bicyclic compound contains two bridgehead nitrogen atoms. For example, the nitrogen atoms form a chiral center. For example, the Tröger's base has a nitrogen-containing heterocyclic ring. The Tröger's base skeleton may have an intrinsic microporosity. In addition, the Tröger's base skeleton may be a skeleton having excellent rigidity. By virtue of having a Tröger's base skeleton, the QTB-PIM 11 is resistant to, for example, swelling.

At least one of the two bridgehead nitrogen atoms contained in the Tröger's base skeleton may be quaternized. When the QTB-PIM 11 includes a linker L as will be described later, a nitrogen atom contained in the linker L may be quaternized. The nitrogen atoms contained in the QTB-PIM 11 may be quaternized at least partially, or all the nitrogen atoms contained in the QTB-PIM 11 may be quaternized. According to such a configuration, the QTB-PIM 11 tends to exhibit excellent hydroxide ion conductivity more reliably.

For example, the QTB-PIM 11 has a molecular structure represented by the following general formula (1):

[Chem. 1]

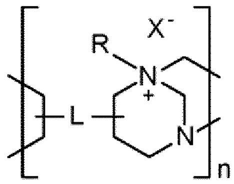

General formula (1)

In the general formula (1), n is a natural number of greater than or equal to 1.

In the general formula (1), the substituent R may be a hydrogen atom or a hydrocarbon group. For example, the hydrocarbon group has 3 or less carbon atoms. Examples of the hydrocarbon groups include methyl group, ethyl group and isopropyl group. When the substituent R is a hydrocarbon group, the QTB-PIM 11 tends to exhibit excellent hydroxide ion conductivity even when water electrolysis is performed under alkaline conditions.

In the general formula (1), $X^-$ is an anion. Examples of the anions include halide ions, $OH^-$, $HCO_3^-$, $NO_3^-$, $HSO_4^-$, $CN^-$, $CH_3COO^-$ and $ClO^-$. Examples of the halide ions include $F^-$, $Cl^-$, $Br^-$ and $I^-$.

In the general formula (1), L denotes a linker. For example, the linker L is a group of atoms that links the nitrogen-containing heterocyclic rings to one another. For example, the nitrogen-containing heterocyclic rings include a Tröger's base skeleton. The linker L is not limited to any particular group of atoms. For example, the group of atoms includes an aromatic ring. With such a configuration, the QTB-PIM 11 may attain excellent rigidity more reliably.

In the general formula (1), for example, the linker L does not include a crown ether. That is, the group of atoms linking the nitrogen-containing heterocyclic rings together in the QTB-PIM 11 may contain no crown ethers. With such a configuration, the QTB-PIM 11 exhibits resistance to swelling more reliably.

For example, the QTB-PIM 11 may have a cationic functional group. As described hereinabove, the QTB-PIM 11 has a quaternary ammonium group. Thus, the QTB-PIM 11 has $X^-$ as the counter anion for the quaternary ammonium group. In the electrolysis of water using an electrode containing the QTB-PIM 11, hydroxide ions in the aqueous solution are easily incorporated into the QTB-PIM 11 by, for example, ion exchange with $X^-$ contained in the QTB-PIM 11. Thus, the QTB-PIM 11 tends to exhibit excellent hydroxide ion conductivity more reliably.

In the QTB-PIM 11, the Tröger's base skeleton containing a quaternary ammonium group may be present as the main chain or a branched chain. The QTB-PIM 11 may have additional substituents. Examples of such additional substituents include halogen groups, hydroxyl groups, alkyl groups, alkoxy groups, carboxyl groups, ester groups, acyl groups, amino groups, nitro groups, sulfo groups and aryl groups. Examples of the halogen groups include fluoro group, chloro group and bromo group.

The QTB-PIM 11 may be a copolymer composed of a plurality of kinds of monomers. All the monomers forming the copolymer may have a Tröger's base skeleton containing a quaternary ammonium group. The QTB-PIM 11 may be a copolymer of one or more kinds of monomers having a Tröger's base skeleton containing a quaternary ammonium group, and one or more kinds of monomers having no Tröger's base skeletons. Even in this case, the QTB-PIM 11 has a Tröger's base skeleton containing a quaternary ammonium group and thus the QTB-PIM 11 tends to exhibit excellent hydroxide ion conductivity more reliably.

The QTB-PIM 11 may be a homopolymer that includes a single kind of a monomer having a Tröger's base skeleton containing a quaternary ammonium group. The QTB-PIM 11 according to this configuration tends to be produced at low cost. Further, when the QTB-PIM 11 is formed of a single kind of a monomer, the QTB-PIM 11 tends to have, for example, stable quality.

The ion exchange capacity (IEC) of the QTB-PIM 11 is not limited to any particular value. For example, the ion

exchange capacity of the QTB-PIM 11 is less than or equal to 1.0 mmol per gram (mmol/g). With this configuration, the QTB-PIM 11 exhibits resistance to swelling more reliably. In addition, such QTB-PIM 11 tends to exhibit excellent ion conductivity more reliably. The ion exchange capacity of the QTB-PIM 11 may be less than or equal to 0.95 mmol/g, may be less than or equal to 0.93 mmol/g, and in some cases may be less than or equal to 0.50 mmol/g. The lower limit of the ion exchange capacity of the QTB-PIM 11 is not limited to any particular value, and may be 0.05 mmol/g or may be 0.1 mmol/g. For example, the ion exchange capacity of the QTB-PIM 11 may be determined by the Mohr's method. In the Mohr's method, the amount of substance of chloride ions contained in a compound of interest is measured by titration with silver nitrate solution using potassium chromate as the indicator.

[Catalysts]

At an anode or a cathode of a water electrolysis cell, the catalyst 10 exhibits activity in the reaction that generates a gas such as hydrogen or oxygen. For example, the catalyst 10 is a metal or a metal oxide. Examples of the metals include Pt. Examples of the metal oxides include layered double hydroxides (LDH) and iridium oxide ($IrO_x$). The catalyst 10 may include LDH or may include $IrO_x$. The catalyst 10 may include LDH as a main component. The catalyst 10 may include $IrO_x$ as a main component. The term "main component" means that the component represents the largest mass proportion. With the configuration described above, the electrode catalyst 1 tends to attain a low overvoltage more reliably.

For example, the LDH includes two or more kinds of transition metals. The transition metals include, for example, at least two selected from the group consisting of V, Cr, Mn, Fe, Co, Ni, Cu, W and Ru.

For example, the LDH has a composition represented by the following compositional formula (2):

$$[M1^{2+}_{1-x}M2^{3+}_{x}(OH)_2][yA^{n-}\cdot mH_2O] \qquad \text{Compositional formula (2)}$$

In the compositional formula (2), $M1^{2+}$ is a divalent transition metal ion. $M2^{3+}$ is a trivalent transition metal ion. $A^{n-}$ is an interlayer anion. The letter x is a rational number satisfying the condition of $0 < x < 1$. The letter y is a number corresponding to the amount required to balance the charges. The letter n is an integer. The letter m is an appropriate rational number.

For example, the LDH may contain Ni and Fe. In the compositional formula (2), for example, M1 may be Ni and M2 may be Fe. With this configuration, the electrode catalyst 1 attains excellent catalytic activity more reliably and tends to exhibit higher catalytic activity than when, for example, M1 is Co.

The ratio of the amount of substance of Fe to the total of the amounts of substance of Ni and Fe contained in the LDH may be greater than or equal to 0.25 and less than or equal to 0.5. With this configuration, the electrode catalyst 1 tends to attain excellent catalytic activity more reliably.

The LDH may include a chelating agent. In this case, the chelating agent may be coordinated to a transition metal ion in the LDH. In this manner, the dispersion stability of the LDH may be enhanced. Further, when the LDH includes a chelating agent, the LDH may be produced with a small particle size. As a result, the surface area of the LDH may be enhanced and thus the catalytic activity may be increased. The average particle size of the LDH may be less than or equal to 100 nm or may be less than or equal to 50 nm. The average particle size of the LDH may be less than or equal to 10 nm. The lower limit of the average particle size of the LDH is not limited to any particular value. The lower limit may be 1.5 nm or may be 2 nm. The LDH includes primary particles that include one or more single-crystal microregions, and secondary particles that are collections of such primary particles. The grain size distribution of the LDH is obtained by a small-angle X-ray scattering method (SAXS), and the relationships between the particle size and the distribution are represented by a two-dimensional distribution map. The area of the two-dimensional distribution map is divided by the total number of particles to determine the average particle size. The term distribution means a numerical value proportional to the total volume occupied by particles of a certain particle size. The area of the two-dimensional distribution map is, for example, the product of the particle size multiplied by the number of particles having that particle size.

The chelating agent is not limited to any particular chelating agent. The chelating agent is, for example, an organic compound capable of coordinating to a transition metal in the LDH. The chelating agent may be at least one of bidentate organic ligands and tridentate organic ligands. Examples of the chelating agents include β-diketones, β-ketoesters and hydroxycarboxylic acids. Examples of the β-diketones include acetylacetone (ACAC), trifluoroacetylacetone, hexafluoroacetylacetone, benzoylacetone, thenoyltrifluoroacetone, dipivaloylmethane, dibenzoylmethane and ascorbic acid. Examples of the β-ketoesters include methyl acetoacetate, ethyl acetoacetate, allyl acetoacetate, benzyl acetoacetate, n-propyl acetoacetate, isopropyl acetoacetate, n-butyl acetoacetate, isobutyl acetoacetate, tert-butyl acetoacetate, 2-methoxyethyl acetoacetate and methyl 3-oxopentanoate. Examples of the hydroxycarboxylic acids and salts thereof include tartaric acid, citric acid, malic acid, gluconic acid, ferulic acid, lactic acid and glucuronic acid, and salts thereof. The chelating agent may include at least one selected from the group consisting of acetylacetone and trisodium citrate. The chelating agent may be at least one of acetylacetone and trisodium citrate.

$A^{n-}$ is an interlayer ion. $A^{n-}$ is an inorganic ion or an organic ion. Examples of the inorganic ions include $CO_3^{2-}$, $NO_3^-$, $Cl^-$, $SO^{2-}$, $Br^-$, $OH^-$, $F^-$, $I^-$, $Si_2O_5^{2-}$, $B_4O_5(OH)_4^{2-}$ and $PO_4^{3-}$. Examples of the organic ions include $CH_3(CH_2)_nSO_4^-$, $CH_3(CH_2)_nCOO^-$, $CH_3(CH_2)_nPO_4^-$ and $CH_3(CH_2)_nNO_3^-$. $An^-$ is an anion inserted between metal hydroxide layers together with water molecules. The charge and the ion size of $A^{n-}$ are not limited to any particular values. The LDH may include a single kind of $A^{n-}$ or a plurality of kinds of $A^{n-}$.

Fig. 2 is a view schematically illustrating an exemplary crystal structure of LDH represented by the compositional formula (2). As illustrated in Fig. 2, the LDH 20 has $OH^-$ at each vertex of the octahedrons centered on $M1^{2+}$ or $M2^{3+}$. The metal hydroxide is represented by $[M1_{1-x}M2_x(OH)_2]^{x+}$. The metal hydroxide has a layered structure in which hydroxide octahedrons are two-dimensionally connected together while sharing edges. The anions and water molecules are located between the layers of the metal hydroxide. The layers of the metal hydroxide function as host layers 21, and the anions and water molecules are inserted as a guest layer 22. That is, the LDH 20 as a whole has a sheet-like structure in which the host layers 21 of the metal hydroxide, and the guest layers 22 of the anions and water molecules are alternately stacked on top of one another. In the structure of the LDH 20, part of $M1^{2+}$ contained in the metal hydroxide layers is replaced by $M2^{3+}$. Thus, the surface of the LDH 20 is usually positively charged.

The catalyst 10 typically has a particulate shape. The shape of the particles is not limited to any particular shape. Examples of the shapes include spheres, elliptical spheres, fibers and scales.

[Carriers]

The electrode catalyst 1 may further include a carrier. For example, the carrier supports the catalyst 10. With this configuration, the catalyst 10 is stably arranged on the surface of the carrier, and thus the electrode catalyst 1 tends to maintain high catalytic activity.

Fig. 3 is a view schematically illustrating another example of the electrode catalysts for water electrolysis cells according to the present embodiment. An electrode catalyst 2 includes a catalyst 10, QTB-PIM 11 and a carrier 12. In the electrode catalyst 2, for example, the carrier 12 supports the catalyst 10. Because the QTB-PIM 11 has hydroxide ion conductivity, even this configuration allows the raw material for the gas-generating reaction of water electrolysis to be supplied more reliably to the catalyst 10. Consequently, the increase in overvoltage may be suppressed more reliably when a voltage is applied to the electrode catalyst 2. That is, the electrode catalyst 2 tends to attain a low overvoltage.

In the electrode catalyst 2, for example, the QTB-PIM 11 is present on at least part of the surface of the catalyst 10. The QTB-PIM 11 may be present between particles of the catalyst 10. The QTB-PIM 11 may be present on at least part of the surface of the carrier 12. The QTB-PIM 11 may be present between particles of the carrier 12. The QTB-PIM 11 may be present between the carrier 12 and the catalyst 10. The QTB-PIM 11 may be in contact with the catalyst 10. The QTB-PIM 11 may be in contact with the carrier 12. The QTB-PIM 11 may cover at least part of the surface of the catalyst 10. The QTB-PIM 11 may cover at least part of the surface of the carrier 12. As a result of the electrode catalyst 2 including the QTB-PIM 11, enhancements may be attained in the adhesion between the catalyst 10 and a base, the adhesion between the carrier 12 and a base, and the adhesion between the catalyst 10 and the carrier 12. In addition, as a result of the electrode catalyst 2 including the QTB-PIM 11, the electrode catalyst 2 may be formed on a base such as a substrate with enhanced adhesion between the base and the electrode catalyst 2. Consequently, the electrode catalyst 2 tends to exhibit excellent durability.

For example, as described hereinabove, the QTB-PIM 11 has resistance to swelling. Thus, the distance between, for example, the catalyst 10 and the carrier 12 may be controlled appropriately even in the case where the QTB-PIM 11 is present between the catalyst 10 and the carrier 12. As a result, the increase in electrical resistance between the catalyst 10 and the carrier 12 and between the particles of the carrier 12 may be suppressed, and the electrode catalyst 2 tends to attain a low overvoltage.

The carrier 12 typically has conductivity. The material of the carrier 12 is not limited to any particular material. Examples of the materials of the carriers 12 include transition metals and carbon materials. Examples of the transition metals include V, Cr, Mn, Fe, Co, Ni, Cu, W and Ru. Examples of the carbon materials include acetylene black and Ketjen black (KB). The electrode catalyst 2 including such a material tends to exhibit excellent catalytic activity more reliably. The carrier 12 may include only a single material or a plurality of materials selected from the materials described above. When the carrier 12 includes a plurality of transition metals, the carrier 12 may be made of an alloy.

For example, the carrier 12 may include a porous material such as a foam.

The shape of the carrier 12 is not limited to any particular shape. For example, the carrier 12 has a particulate shape. The shape of the particles is not limited to any particular shape. Examples of the shapes include spheres, elliptical spheres, fibers and scales.

The size of the carrier 12 is not limited to any particular value. When, for example, the shape of the carrier 12 is spherical, the average particle size of the carrier 12 is not limited to any particular value. The average particle size of the carrier 12 may be less than or equal to 100 nm, or may be less than or equal to 50 nm. The lower limit of the average particle size of the carrier 12 may be 10 nm, or may be 20 nm. With this configuration, the carrier 12 easily supports a

sufficient amount of LDH. In addition, a sufficient amount of electrons may be supplied to the catalyst 10 when a voltage is applied to the electrode catalyst 2, and thus the overvoltage tends to be lowered. Further, the above configuration ensures that the electrode catalyst 2 will exhibit excellent performance more reliably in, for example, the anodic reaction in water electrolysis. For example, the average particle size of the carrier 12 may be determined by observing the carrier 12 with a transmission electron microscope (TEM). Specifically, the maximum diameter and the minimum diameter may be measured with respect to each of random fifty particles of the carrier 12 showing the whole appearance of the carrier 12, the maximum diameter and the minimum diameter being then averaged to give the particle size of each particle of the carrier 12, and the arithmetic average of the particle sizes may be calculated to determine the average particle size.

The electrode catalyst 1 or 2 according to the present embodiment is used in, for example, a proton exchange membrane type water electrolyzer, an anion exchange membrane type water electrolyzer or an alkali diaphragm type water electrolyzer. The electrode catalyst 1 or 2 may be used in at least one of an anode and a cathode in the water electrolyzer.

(Second embodiment)

Fig. 4 is a sectional view schematically illustrating an example of water electrolysis cells according to the present embodiment.

A water electrolysis cell 3 includes an electrolyte membrane 31, an anode 100 and a cathode 200. For example, the electrolyte membrane 31 is disposed between the anode 100 and the cathode 200. At least one of the anode 100 and the cathode 200 includes the electrode catalyst 1 or 2 described in the first embodiment.

The electrolyte membrane 31 may be an electrolyte membrane having ion conductivity. The electrolyte membrane 31 is not limited to any particular type. The electrolyte membrane 31 may include an anion exchange membrane. The electrolyte membrane 31 is configured so that mixing is unlikely to happen between the oxygen gas generated at the anode 100 and the hydrogen gas generated at the cathode 200.

For example, the anode 100 includes a catalyst layer 30. The catalyst layer 30 may be provided on the main face on one side of the electrolyte membrane 31. The term "main face" means that the face has the largest area among the faces of the electrolyte membrane 31. The electrode catalyst contained in the catalyst layer 30 may be the electrode catalyst 1 or the electrode catalyst 2 of the first embodiment. The anode 100 may further include a porous and conductive gas diffusion layer 33 disposed on the catalyst layer 30.

For example, the cathode 200 includes a catalyst layer 32. The catalyst layer 32 may be provided on the other main face of the electrolyte membrane 31. That is, the catalyst layer 32 may be provided on the main face of the electrolyte membrane 31 on the side opposite from the main face on which the catalyst layer 30 is disposed. The catalytic metal that may be used for the catalyst layer 32 is not limited to any particular type. This electrode catalyst may be platinum, the electrode catalyst 1 or the electrode catalyst 2. The cathode 200 may further include a porous and conductive gas diffusion layer 34 disposed on the catalyst layer 32.

According to the above configuration, the water electrolysis cell 3 may attain a low overvoltage by virtue of at least one of the anode 100 and the cathode 200 including the electrode catalyst 1 or 2.

(Third embodiment)

Fig. 5 is a sectional view schematically illustrating an example of water electrolyzers according to the present embodiment.

A water electrolyzer 4 includes a water electrolysis cell 3 and a voltage applicator 40. The water electrolysis cell 3 is the same as the water electrolysis cell 3 of the second embodiment, and thus the description thereof will be omitted.

The voltage applicator 40 is connected to the anode 100 and the cathode 200 of the water electrolysis cell 3. The voltage applicator 40 is a device that applies a voltage to the anode 100 and the cathode 200 of the water electrolysis cell 3.

The voltage applicator 40 raises the potential at the anode 100, and the potential at the cathode 200 becomes low. The voltage applicator 40 is not limited to any particular type as long as a voltage can be applied between the anode 100 and the cathode 200. The voltage applicator 40 may be a device that controls the voltage applied between the anode 100 and the cathode 200. Specifically, when the voltage applicator 40 is connected to a direct-current power supply such as a battery, a solar cell or a fuel cell, the voltage applicator 40 includes a DC/DC converter. When the voltage applicator 40 is connected to an alternate-current power supply such as a commercial power supply, the voltage applicator 40 includes an AC/DC converter. The voltage applicator 40 may be a wide-range power supply that controls the voltage applied between the anode 100 and the cathode 200 and the current flowing between the anode 100 and the cathode 200 so that the electric power supplied to the water electrolyzer 4 will be a preset value.

According to the above configuration, the water electrolyzer 4 may attain a low overvoltage.

(Fourth embodiment)

Fig. 6 is a sectional view schematically illustrating an example of water electrolysis cells according to the present embodiment.

A water electrolysis cell 5 according to the present embodiment is, for example, an alkaline water electrolysis cell 5 using an alkaline aqueous solution. In alkaline water electrolysis, an alkaline aqueous solution is used. Examples of the alkaline aqueous solutions include aqueous potassium hydroxide solution and aqueous sodium hydroxide solution.

The alkaline water electrolysis cell 5 includes an electrolysis tank 70, a diaphragm 41, an anode 300 and a cathode 400. The inside of the electrolysis tank 70 is divided into a first space 50 and a second space 60 by the diaphragm 41. The anode 300 is disposed in the first space 50. The cathode 400 is disposed in the second space 60. At least one of the anode 300 and the cathode 400 includes the electrode catalyst 1 or 2 described in the first embodiment.

The anode 300 may include the electrode catalyst 1 or the electrode catalyst 2. For example, the anode 300 includes a catalyst layer, and the catalyst layer may include the electrode catalyst 1 or the electrode catalyst 2.

The cathode 400 may include the electrode catalyst 1 or the electrode catalyst 2. For example, the cathode 400 includes a catalyst layer, and the catalyst layer may include the electrode catalyst 1 or the electrode catalyst 2.

For example, the diaphragm 41 is an alkaline water electrolysis diaphragm.

The anode 300 may be arranged in contact with the diaphragm 41, or there may be a gap between the anode 300 and the diaphragm 41. The cathode 400 may be arranged in contact with the diaphragm 41, or there may be a gap between the cathode 400 and the diaphragm 41.

The alkaline water electrolysis cell 5 electrolyzes an alkaline aqueous solution to produce hydrogen and oxygen. An aqueous solution containing a hydroxide of an alkali metal or an alkaline earth metal may be supplied to the first space 50 in the alkaline water electrolysis cell 5. An alkaline aqueous solution may be supplied to the second space 60 in the alkaline water electrolysis cell 5. Hydrogen and oxygen are produced by performing electrolysis while discharging the alkaline aqueous solutions of predetermined concentration from the first space 50 and the second space 60.

According to the above configuration, the alkaline water electrolysis cell 5 may attain a low overvoltage by virtue of at least one of the anode 300 and the cathode 400 including the electrode catalyst 1 or 2.

(Fifth embodiment)

Fig. 7 is a sectional view schematically illustrating an example of water electrolyzers according to the present embodiment.

A water electrolyzer 6 according to the present embodiment is, for example, an alkaline water electrolyzer 6 using an alkaline aqueous solution. The alkaline water electrolyzer 6 includes an alkaline water electrolysis cell 5 and a voltage applicator 40. The alkaline water electrolysis cell 5 is the same as the alkaline water electrolysis cell 5 of the fourth embodiment, and thus the description thereof will be omitted.

The voltage applicator 40 is connected to the anode 300 and the cathode 400 of the alkaline water electrolysis cell 5. The voltage applicator 40 is a device that applies a voltage to the anode 300 and the cathode 400 of the alkaline water electrolysis cell 5.

According to the above configuration, the alkaline water electrolyzer 6 may attain a low overvoltage.

## EXAMPLES

The present disclosure will be described in more detail by way of EXAMPLES hereinbelow. The following EXAMPLES are only illustrative of the present disclosure, and the scope of the present disclosure is not limited to the following EXAMPLES.

(EXAMPLE 1)

(Preparation of Ni-Fe LDH)

LDH containing Ni and Fe as transition metals, namely, Ni-Fe LDH was prepared as follows. First, a mixed solvent of water and ethanol was prepared. The ethanol that was used was a special grade reagent manufactured by FUJIFILM Wako Pure Chemical Corporation. The volume ratio of water to ethanol in the mixed solvent was water volume:ethanol volume = 2:3. Nickel chloride hexahydrate manufactured by FUJIFILM Wako Pure Chemical Corporation and iron chloride hexahydrate manufactured by FUJIFILM Wako Pure Chemical Corporation were dissolved into the mixed solvent. In the resultant mixture solution, the total concentration of Ni ions and Fe ions was 1.0 mol/L, and the ratio of the amount of substance of Fe ions to the total of the amounts of substance of Ni ions and Fe ions was 0.33. Further, acetylacetone (ACAC) as a chelating agent was added to the mixed solvent in an amount of substance that

was one third of the total of the amounts of substance of Ni ions and Fe ions. The solution thus obtained was stirred for 30 minutes. To the solution containing Ni-Fe LDH, propylene oxide (POX) as a pH-increasing agent was added in an amount of substance two times as much as the amount of substance of chloride ions in the solution. The solution thus obtained was stirred for 1 minute. During this process, POX gradually captured hydrogen ions in the solution and consequently the pH of the solution increased gradually. Thus, the target sample, Ni-Fe LDH, was recovered after the solution obtained was allowed to stand for about 3 days. Subsequently, the grain size distribution of Ni-Fe LDH dispersed in the solution was determined by a small-angle X-ray scattering method (SAXS) using SmartLab manufactured by Rigaku Corporation. The relationships between the particle size and the distribution were represented by a two-dimensional distribution map. The area of the two-dimensional distribution map was divided by the total number of particles to determine the average particle size of the LDH. The average particle size of the Ni-Fe LDH was 10 nm.

(Preparation of mixture including Ni-Fe LDH and Ni particles)

First, LDH containing Ni and Fe as transition metals, namely, Ni-Fe LDH was prepared as follows. First, a mixed solvent of water and ethanol was prepared. The ethanol that was used was a special grade reagent manufactured by FUJIFILM Wako Pure Chemical Corporation. The volume ratio of water to ethanol in the mixed solvent was water volume:ethanol volume = 2:3. Nickel chloride hexahydrate manufactured by FUJIFILM Wako Pure Chemical Corporation and iron chloride hexahydrate manufactured by FUJIFILM Wako Pure Chemical Corporation were dissolved into the mixed solvent. In the resultant mixture solution, the total concentration of Ni ions and Fe ions was 1.0 mol/L, and the ratio of the amount of substance of Fe ions to the total of the amounts of substance of Ni ions and Fe ions was 0.33. Further, acetylacetone (ACAC) as a chelating agent was added to the mixed solvent in an amount of substance that was one third of the total of the amounts of substance of Ni ions and Fe ions. The solution thus obtained was stirred for 30 minutes.

To the solution, Ni particles as a carrier were added in the same mass as the mass of Ni-Fe LDH that would be formed assuming that Ni and Fe contained in the solution had completely reacted ideally. The Ni particles were a product from US Research Nanomaterials, Inc., and had a particle size of 40 nm. Next, to the solution containing the Ni-Fe LDH and the Ni particles, propylene oxide (POX) as a pH-increasing agent was added in an amount of substance two times as much as the amount of substance of chloride ions in the solution. The solution thus obtained was stirred for 1 minute. During this process, POX gradually captured hydrogen ions in the solution and consequently the pH of the solution increased gradually. Thus, the target sample that was a mixture including the Ni-Fe LDH and the Ni particles was recovered after the solution obtained was allowed to stand for about 3 days.

(Preparation of QTB-PIM (2))

QTB-PIM (2) of EXAMPLE 1 was prepared with reference to Non Patent Literature 1. A solution was obtained by mixing 3 g of 4,4'-diamino-3,3'-dimethylbiphenyl together with dimethoxymethane in an amount of substance five times as much as the amount of substance of 4,4'-diamino-3,3'-dimethylbiphenyl. The solution was cooled to 0°C, and 24 milliliters (mL) of trifluoroacetic acid was added dropwise, thereby forming a mixture solution. The mixture solution was reacted at room temperature (25°C) for 5 days.

Next, the mixture solution was added to an aqueous ammonium hydroxide solution that was being vigorously stirred. A mixture liquid was thus prepared. The mixture liquid was allowed to stand for 2 hours to give a solid. The solid thus obtained was collected by filtration and was washed sequentially with water, methanol and acetone. After being washed, the solid was dissolved into chloroform. Further, methanol was added to precipitate a polymer. These operations were repeated two times. The polymer thus obtained was dried in a vacuum oven. A Tröger's base-polymer of intrinsic microporosity (TB-PIM) (1) was thus obtained. The TB-PIM (1) was an organic polymer represented by the following structural formula:

[Chem. 2]

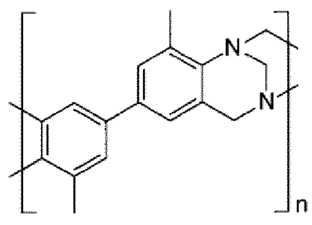

0.62 g of the TB-PIM (1) was dissolved into 12.5 mL of chloroform to give a solution. 25 mL of iodomethane

was added to the solution to form a mixture liquid. The mixture liquid was reacted at room temperature for 5 hours. Thereafter, the solvent was evaporated under reduced pressure from the mixture liquid, and a polymer powder was collected. The polymer powder thus obtained was dried in a vacuum oven to give QTB-PIM (2) of EXAMPLE 1. The QTB-PIM (2) was an organic polymer resulting from the quaternization of part of the nitrogen atoms in the Tröger's base skeleton of the TB-PIM (1). The QTB-PIM (2) was an organic polymer represented by the following structural formula:

[Chem. 3]

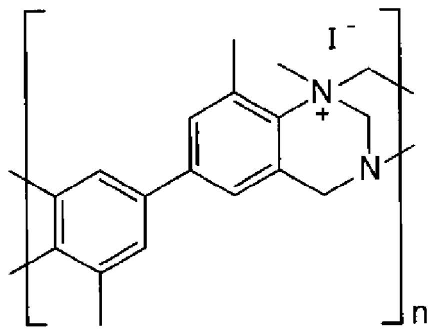

(Preparation of catalytic activity evaluation sample)

The mixture including the Ni-Fe LDH and the Ni particles was mixed together with the QTB-PIM (2) to form a mixture. In the mixture, the mass ratio of the mixture including the Ni-Fe LDH and the Ni particles to the QTB-PIM (2) was 20:1 = the mass of the mixture including the Ni-Fe LDH and the Ni particles The mass of the QTB-PIM (2). The total mass of the mixture obtained above was 21 mg. 1.05 mL of chloroform was added to the mixture. A liquid for catalyst ink was thus prepared. The chloroform that was used was a special grade reagent manufactured by FUJIFILM Wako Pure Chemical Corporation. The liquid for catalyst ink was treated with an ultrasonic homogenizer for 30 minutes to break up large particles. A catalyst ink of EXAMPLE 1 was thus prepared. A catalytic activity evaluation sample of EXAMPLE 1 was obtained by dropping 10 μL of the catalyst ink of EXAMPLE 1 onto a rotating disk electrode and drying the ink at room temperature.

(EXAMPLE 2)

A catalytic activity evaluation sample of EXAMPLE 2 was obtained in the same manner as the preparation of the catalytic activity evaluation sample of EXAMPLE 1, except for the following points. The Ni particles as the carrier were replaced by Ketjen black EC600JD manufactured by Lion Specialty Chemicals Co., Ltd. To the solution including the Ni-Fe LDH, the Ketjen black was added to form a mixture liquid. In the mixture liquid, the mass ratio of the Ni-Fe LDH to the Ketj en black was 2:1 = the mass of the Ni-Fe LDH:the mass of the Ketjen black. The mixture including the Ni-Fe LDH and the Ketjen black was mixed together with the QTB-PIM (2) to form a mixture. In the mixture, the mass ratio of the Ni-Fe LDH to the QTB-PIM (2) was 5:1 = the mass of the Ni-Fe LDH:the mass of the QTB-PIM (2). The total mass of the mixture obtained above was 8.5 mg.

(EXAMPLE 3)

A catalytic activity evaluation sample of EXAMPLE 3 was obtained in the same manner as the preparation of the catalytic activity evaluation sample of EXAMPLE 1, except for the following points. Iridium oxide $IrO_x$ was used as a catalyst in place of the mixture including the Ni-Fe LDH and the Ni particles. The $IrO_x$ and the QTB-PIM (2) were mixed together in a mass ratio of 5:1 = the mass of the $IrO_x$:the mass of the QTB-PIM (2). The total mass of the mixture obtained above was 6 mg.

(EXAMPLE 4)

(Preparation of QTB-PIM (4))

TB-PIM (3) was obtained in the same manner as the preparation of the TB-PIM (1) in EXAMPLE 1, except that 2,5-dimethyl-1,4-phenylenediamine was used as a raw material in place of 4,4'-diamino-3,3'-dimethylbiphenyl. The TB-PIM (3) was an organic polymer represented by the following structural formula:

[Chem. 4]

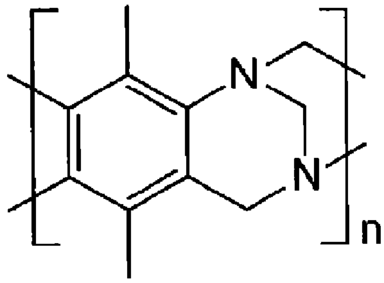

QTB-PIM (4) was obtained in the same manner as the preparation of the QTB-PIM (2) in EXAMPLE 1, except that the TB-PIM (1) was replaced by 0.86 g of the TB-PIM (3). The QTB-PIM (4) was an organic polymer resulting from the quaternization of part of the nitrogen atoms in the Tröger's base skeleton of the TB-PIM (3). The QTB-PIM (4) was an organic polymer represented by the following structural formula:

[Chem. 5]

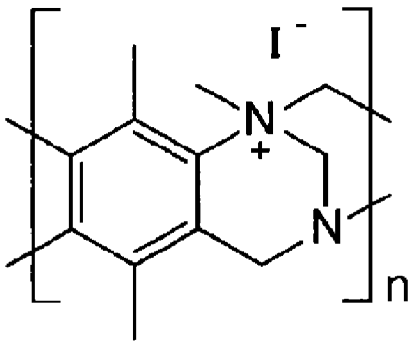

A catalytic activity evaluation sample of EXAMPLE 4 was obtained in the same manner as the preparation of the catalytic activity evaluation sample of EXAMPLE 1, except that the organic polymer was changed from the QTB-PIM (2) to the QTB-PIM (4).

(COMPARATIVE EXAMPLE 1)

A catalytic activity evaluation sample of COMPARATIVE EXAMPLE 1 was obtained in the same manner as the preparation of the catalytic activity evaluation sample of EXAMPLE 1, except that the organic polymer was changed from the QTB-PIM (2) to Sustainion manufactured by Dioxide Materials.

(COMPARATIVE EXAMPLE 2)

A catalytic activity evaluation sample of COMPARATIVE EXAMPLE 2 was obtained in the same manner as the preparation of the catalytic activity evaluation sample of EXAMPLE 1, except for the following points. The organic polymer was changed from the QTB-PIM (2) to FAA-3 manufactured by Fumatech. 1.03 mL of chloroform was used.

(Evaluation of ion exchange capacity of QTB-PIM (2))

The ion exchange capacity of the QTB-PIM (2) of EXAMPLE 1 was calculated as follows.

A sufficient amount of an aqueous NaCl solution having a concentration of 1 mol/L was added to 100 mg of the QTB-PIM (2) to form a solution. The solution was stirred at 40°C for 24 hours. Next, the solution was centrifuged, and the solid thus obtained was collected and was washed with pure water. Next, the solid was dried in a vacuum oven to give QTB-PIM (5) having $Cl^-$ as the counter anion for the quaternary ammonium group. The QTB-PIM (5) was an organic polymer represented by the following structural formula:

[Chem. 6]

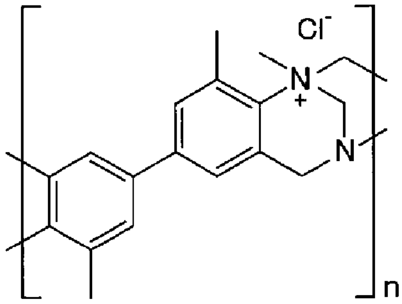

The amount of substance of $Cl^-$ contained in the QTB-PIM (5) was measured based on the reaction formula illustrated below. Specifically, 12.5 mL of a 0.2 mol/L aqueous $NaNO_3$ solution was added to 49 mg of the QTB-PIM (5) to form a solution. The solution was stirred at room temperature for 24 hours. Consequently, the following reaction proceeded, and $Cl^-$ contained in the QTB-PIM (5) was dissolved into the solution and was exchanged with $NO_3^-$ ion.

[Chem. 7]

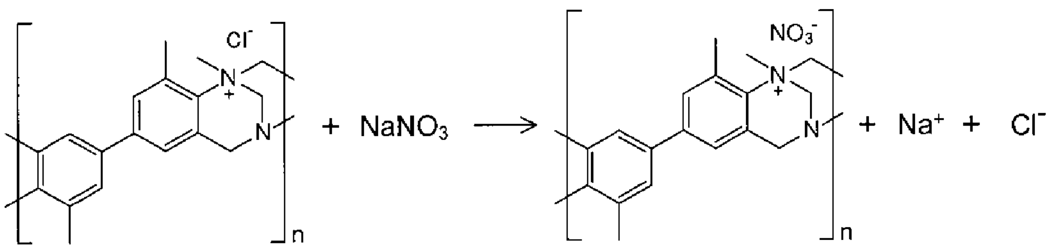


Next, 1.6 mL of a 0.25 mol/L aqueous $K_2CrO_4$ solution and 1 mL of a 0.1 mol/L aqueous $NaHCO_3$ solution were added to the above solution to give a reaction solution. A 7.55 mL portion was weighed out from the reaction solution, and a 0.01 mol/L aqueous $AgNO_3$ solution as an indicator was dropped to the portion of the reaction solution. Consequently, the reactions shown below proceeded. The amount was determined of the indicator that had been dropped until the color of the solution turned to red brown as a result of the progress of the reactions.

$$Na^+ + Cl^- + Ag^+ + NO_3^- \rightarrow AgCl\downarrow \text{ (white precipitate)} + Na^+ + NO_3^-$$

$$2K^+ + CrO_4^- + 2Ag^+ + 2NO_3^- \rightarrow Ag_2CrO_4 \text{ (red brown)} + 2K^+ + 2NO_3^-$$

Based on the above measurement and the equations (3) and (4) below, the ion exchange capacity of the QTB-PIM (2) of EXAMPLE 1 was calculated. The ion exchange capacity of the QTB-PIM (2) of EXAMPLE 1 was 0.25 mmol/g.

$$\text{(Amount of substance of Cl}^- \text{ in QTB-PIM (5)) [mmol]} = \text{(Molar concentration of AgNO}_3\text{) [mol/L]} \times \text{(Amount of AgNO}_3 \text{ dropped) [mL]} \quad \text{Equation (3)}$$

$$\text{(Ion exchange capacity of QTB-PIM (2)) [mmol/g]} = \text{(Amount of substance of Cl}^- \text{ in QTB-PIM (5)) [mmol]/(Mass of QTB-PIM (5) used in measurement) [g]} \quad \text{Equation (4)}$$

(Evaluation of catalyst overvoltage)

The overvoltage of the catalytic activity evaluation samples of EXAMPLES and COMPARATIVE EXAMPLES was measured using potentiostat Versa STAT 4 manufactured by Princeton Applied Research and rotating electrode AFE3T050GC manufactured by Pine Research Instrumentation. By a rotating disk electrode (RDE) method, the current

from the anodic reaction in a water electrolysis cell was measured under the measurement conditions below. The anodic reaction was oxygen-generating reaction. The results are described in Table 1.

[Measurement conditions]

- Solution: 1 mol/L aqueous KOH solution
- Potentials: 1.0 V to 1.65 V (vs. reversible hydrogen electrode (RHE))
- Potential sweep speed: 10 mV/sec
- Electrode rotational speed: 1500 rotations per minute (rpm)

[Table 1]

| | Electrode catalyst | | | Overvoltage (mV) |
|---|---|---|---|---|
| | Catalyst | Carrier | Organic polymer | |
| EX. 1 | Ni-Fe LDH | Ni | QTB-PIM (2) | 254 |
| EX. 2 | Ni-Fe LDH | KB | QTB-PIM (2) | 316 |
| EX. 3 | $IrO_x$ | - | QTB-PIM (2) | 278 |
| EX. 4 | Ni-Fe LDH | Ni | QTB-PIM (4) | 275 |
| COMP. EX. 1 | Ni-Fe LDH | Ni | Sustainion | 392 |
| COMP. EX. 2 | Ni-Fe LDH | Ni | FAA-3 | 337 |

Table 1 describes the results of measurement of the overvoltage of the catalytic activity evaluation samples of EXAMPLES 1 to 4 and COMPARATIVE EXAMPLES 1 and 2. The overvoltages described in Table 1 are values in the first cycle of the redox reaction.

The evaluation samples of EXAMPLES 1 to 4 had a low overvoltage in the redox cycle. The QTB-PIM (2) of EXAMPLE 1 was resistant to swelling, and thus the distance between the catalyst and the carrier was probably controlled appropriately. Probably as a result of this, the increase in electrical resistance between the catalyst and the carrier was successfully suppressed. Further, the QTB-PIM (2) of EXAMPLE 1 had excellent hydroxide ion conductivity, and thus hydroxide ions as the raw material for the gas-generating reaction were probably supplied to the catalyst in a facilitated manner. The evaluation sample of EXAMPLE 1 attained a suppressed increase in overvoltage probably for the reasons described above.

The evaluation samples of EXAMPLES 2 to 4 had a low overvoltage in the redox cycle. The evaluation sample attained a low overvoltage even when a material including Ketjen black was used as the carrier or when conductive $IrO_x$ was used as the catalyst. The evaluation sample attained a low overvoltage even when the QTB-PIM (4) was used as the organic polymer.

In contrast, the evaluation samples of COMPARATIVE EXAMPLES 1 and 2 had a high overvoltage as compared to the evaluation samples of EXAMPLES 1 to 4. Sustainion and FAA-3 are organic polymers having a cationic functional group and are generally known to have hydroxide ion conductivity. However, Sustainion and FAA-3 may be swollen to a high degree. In the evaluation samples of COMPARATIVE EXAMPLES 1 and 2, an increase in electrical resistance was caused between the catalyst and the carrier and also between the carrier particles probably because Sustainion and FAA-3 were swollen, thus resulting in an increase in overvoltage.

Industrial Applicability

The electrode catalyst for water electrolysis cell according to the present disclosure may be used in a water electrolyzer.

Reference Signs List

1, 2 electrode catalysts

3 water electrolysis cell
4 water electrolyzer
5 alkaline water electrolysis cell
6 alkaline water electrolyzer
10 catalyst
11 QTB-PIM
12 carrier
20 LDH
21 host layer
22 guest layer
30, 32 catalyst layers
31 electrolyte membrane
33, 34 gas diffusion layers
40 voltage applicator
41 diaphragm
50 first space
60 second space
70 electrolysis tank
100, 300 anodes
200, 400 cathodes

## Claims

**1.** An electrode catalyst for a water electrolysis cell, the electrode catalyst including:

a catalyst; and
a polymer of intrinsic microporosity having a Tröger's base skeleton containing a quaternary ammonium group.

**2.** The electrode catalyst for the water electrolysis cell according to claim 1, wherein the catalyst includes a layered double hydroxide.

**3.** The electrode catalyst for the water electrolysis cell according to claim 1 or 2, the electrode catalyst further including:

a carrier supporting the catalyst, wherein
the carrier includes at least one selected from the group consisting of a transition metal and carbon.

**4.** The electrode catalyst for the water electrolysis cell according to claim 1, wherein the catalyst includes iridium oxide.

**5.** The electrode catalyst for the water electrolysis cell according to any one of claims 1 to 4, wherein the polymer of intrinsic microporosity is composed of a single kind of a monomer.

**6.** The electrode catalyst for the water electrolysis cell according to any one of claims 1 to 5, wherein

the polymer of intrinsic microporosity includes a group of atoms linking a plurality of nitrogen-containing heterocyclic rings to one another, and
the group of atoms includes an aromatic ring.

**7.** The electrode catalyst for the water electrolysis cell according to claim 6, wherein the group of atoms does not include a crown ether.

**8.** A water electrolysis cell comprising:

an anode;
a cathode; and
an electrolyte membrane disposed between the anode and the cathode, wherein
at least one selected from the group consisting of the anode and the cathode includes the electrode catalyst

according to any one of claims 1 to 7.

**9.** The water electrolysis cell according to claim 8, wherein the electrolyte membrane includes an anion exchange membrane.

**10.** A water electrolysis cell comprising:

a diaphragm separating a first space and a second space from each other;
an anode disposed in the first space; and
a cathode disposed in the second space, wherein
at least one selected from the group consisting of the anode and the cathode includes the electrode catalyst according to any one of claims 1 to 7.

**11.** A water electrolyzer comprising:

the water electrolysis cell according to any one of claims 8 to 10; and
a voltage applicator connected to the anode and the cathode and capable of applying a voltage between the anode and the cathode.

FIG. 1

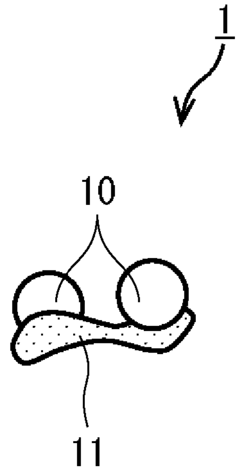


FIG. 2

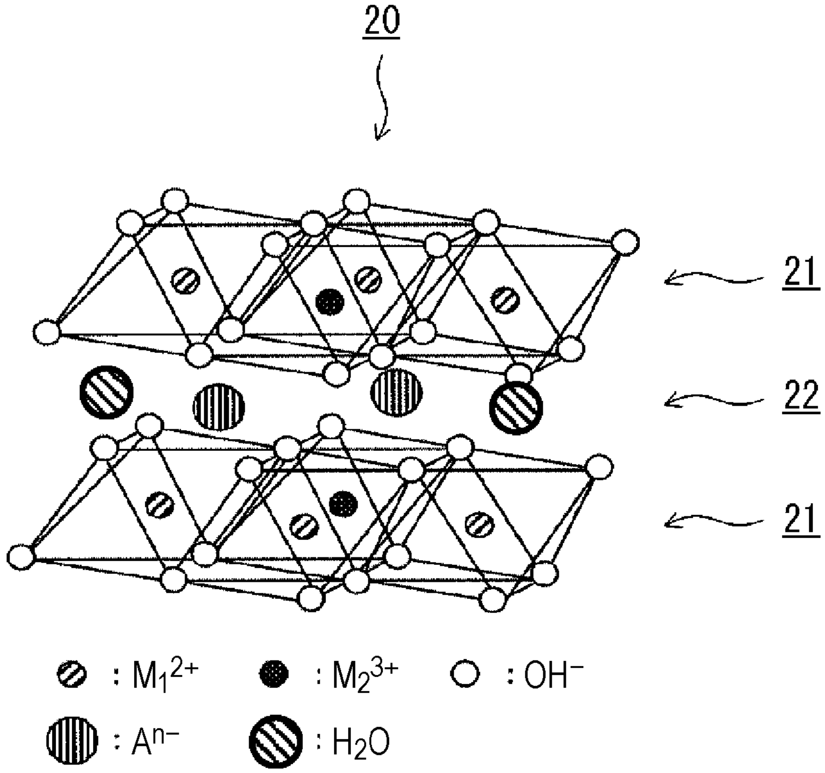

FIG. 3

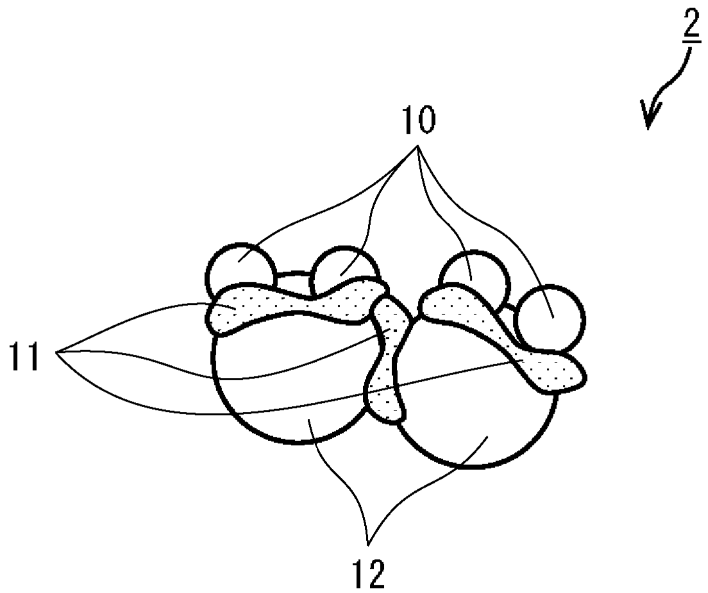


FIG. 4

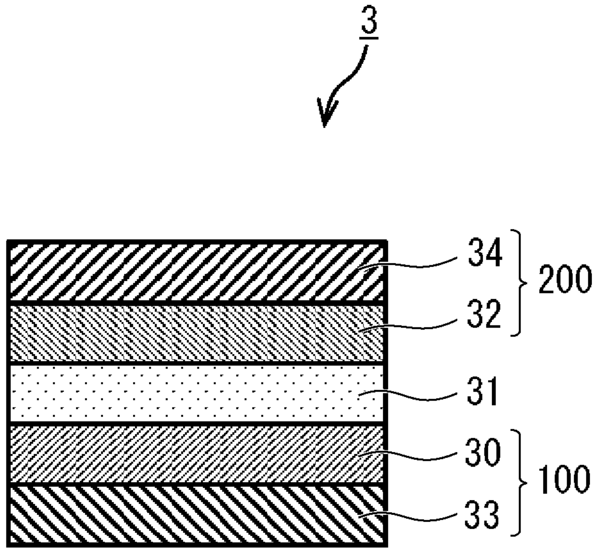

FIG. 5

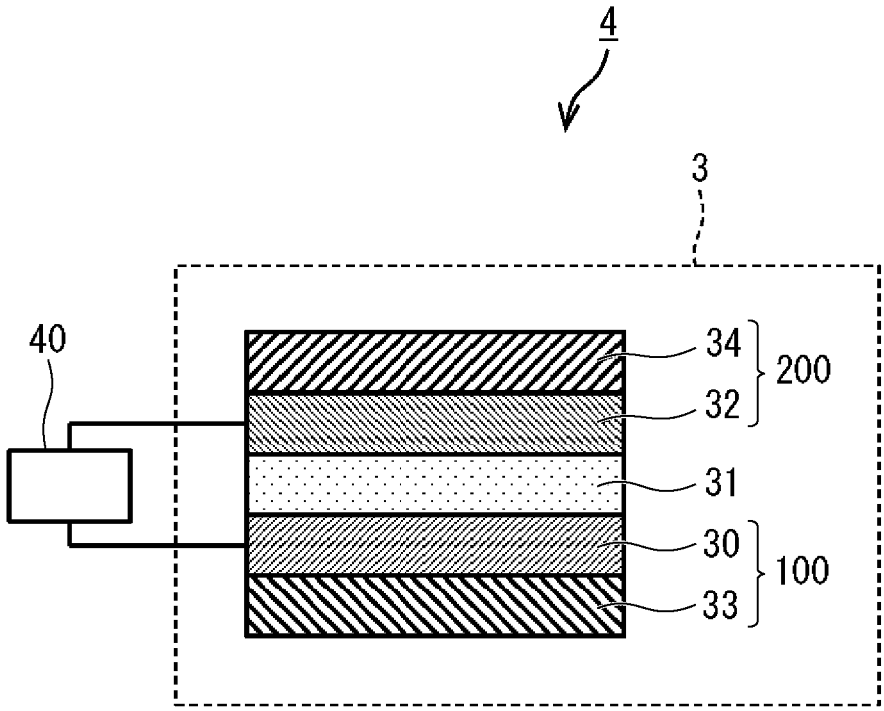


FIG. 6

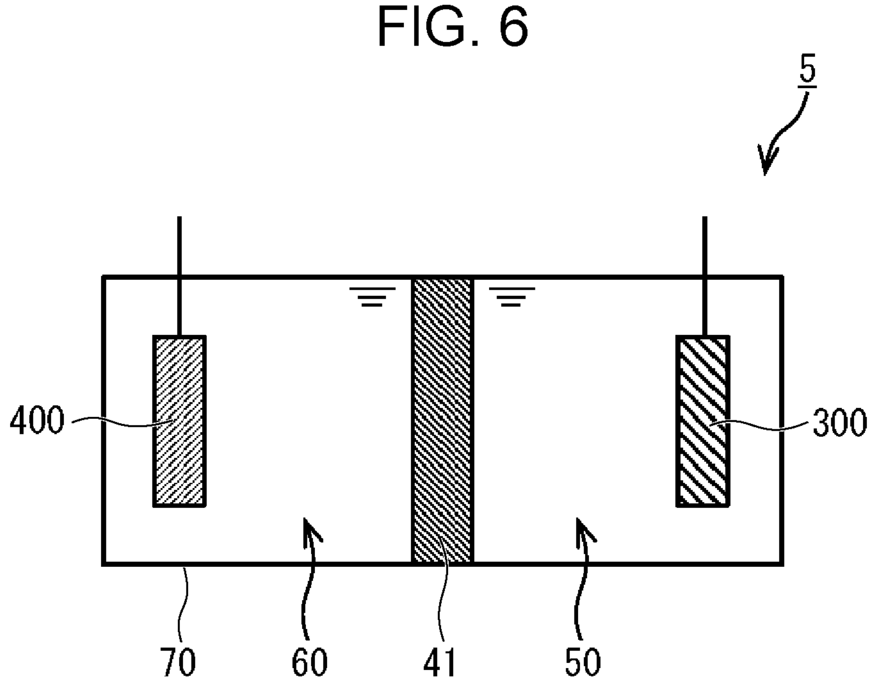

FIG. 7

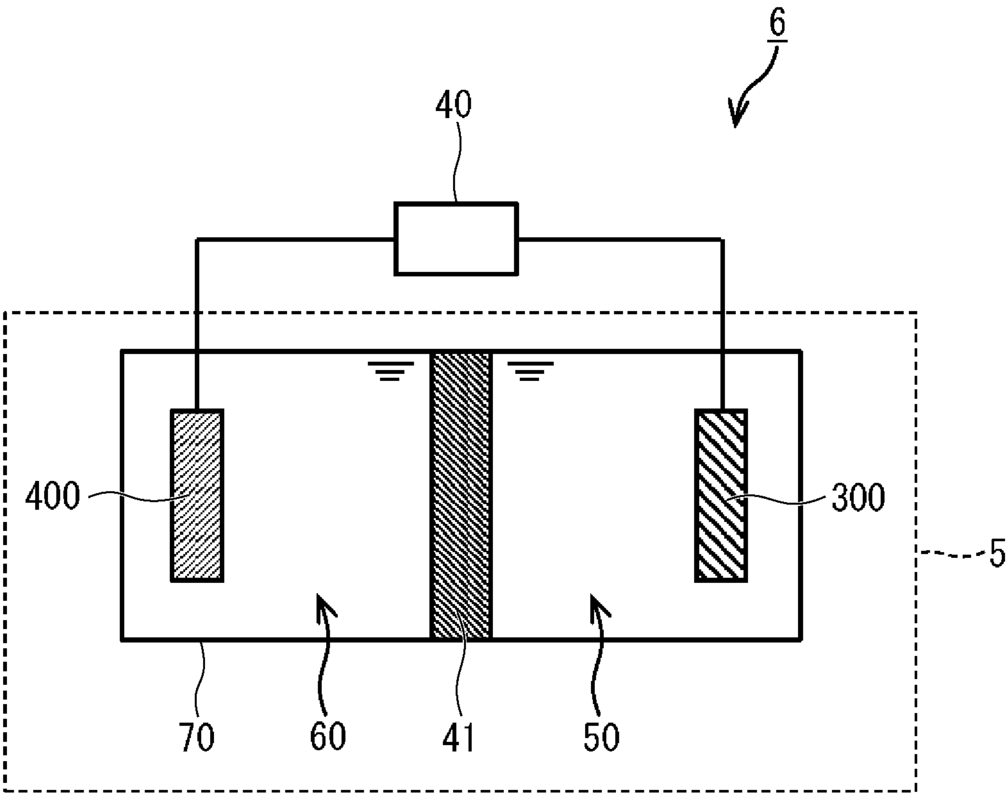

**INTERNATIONAL SEARCH REPORT**

International application No. **PCT/JP2021/035119**

**A. CLASSIFICATION OF SUBJECT MATTER**

***C25B 11/054***(2021.01)i; ***C25B 11/073***(2021.01)i; ***C25B 9/00***(2021.01)i
FI: C25B11/054; C25B9/00 A; C25B11/073

According to International Patent Classification (IPC) or to both national classification and IPC

**B. FIELDS SEARCHED**

Minimum documentation searched (classification system followed by classification symbols)

C25B11/054; C25B11/073; C25B9/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/091357 A1 (DOW GLOBAL TECHNOLOGIES LLC) 01 June 2017 (2017-06-01) | 1-11 |
| A | JP 2017-533346 A (BASF SE) 09 November 2017 (2017-11-09) | 1-11 |
| A | JP 2018-181838 A (PANASONIC IP MANAGEMENT CORP.) 15 November 2018 (2018-11-15) | 1-11 |
| A | JP 2020-515402 A (DOW GLOBAL TECHNOLOGIES LLC) 28 May 2020 (2020-05-28) | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 November 2021** | **07 December 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2021/035119**

| Patent document cited in search report | Publication date (day/month/year) | Patent family member(s) | Publication date (day/month/year) |
|---|---|---|---|
| WO 2017/091357 A1 | 01 June 2017 | US 2018/0319937 A1 | |
| JP 2017-533346 A | 09 November 2017 | US 2017/0204525 A1 | |
| JP 2018-181838 A | 15 November 2018 | US 2018/0301726 A1 | |
| JP 2020-515402 A | 28 May 2020 | US 2020/0009511 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017091357 A


### Non-patent literature cited in the description


- **ZHENGJIN YANG et al.** Highly Conductive Anion-Exchange Membranes from Microporous Tröger's Base Polymers. *Angewandte Chemie International Edition,* 2016, vol. 55, 11499-11502